# EUROPÄISCHE PATENTANMELDUNG

(11) **EP 4 321 007 A1**
(43) Veröffentlichungstag der Anmeldung: **14.02.2024**
(21) Anmeldenummer: 23187927.1
(22) Anmeldetag: 26.07.2023
(51) Int. Cl.: A01C 23/00, B60P 3/22, B60P 3/30

(54) **GÜLLETANK**

(30) Priorität: 08.08.2022 DE 202022001761 U
(71) Anmelder: Zunhammer, Sebastian, 83301 Traunreut (DE)
(72) Erfinder: Zunhammer, Sebastian, 83301 Traunreut (DE)
(74) Vertreter: Einsiedler, Johannes

(57) **Zusammenfassung**

Die Erfindung betrifft einen Gülletank (10), der zur kraft- und/oder formschlüssigen Befestigung an einem Fahrzeugrahmen (6) vorgesehen ist, aufweisend einen im Querschnitt im Wesentlichen runden Hauptkörper (1), der zur Aufnahme von Gülle vorgesehen ist, einen ersten Befestigungsbereich (2a), der an einem hinteren Abschnitt (3a) des Hauptkörpers (1) angeordnet ist, und zumindest einen zweiten Befestigungsbereich (2b), der an einem vorderen, den hinteren Abschnitt (3a) gegenüberliegenden Abschnitt (3b) des Hauptkörpers (1) angeordnet ist, wobei der erste Befestigungsbereich (2a) und der zweite Befestigungsbereich (2b) im Hauptkörper (1) integriert sind, und der erste Befestigungsbereich (2a) und der zweite Befestigungsbereich (2b) als Abweichungen, insbesondere Einbuchtungen, des Querschnitts des im Wesentlichen runden Hauptkörpers (1) ausgebildet sind.

## Beschreibung

Die Erfindung betrifft einen rundlichen Gülletank, der zur kraft- und/oder formschlüssigen Befestigung an einem Fahrzeugrahmen vorgesehen ist, aufweisend einen Hauptkörper, einen ersten Befestigungsbereich und einen zweiten Befestigungsbereich. Weiter betrifft die Erfindung ein Fahrzeug, insbesondere Gülleanhänger, bei dem ein derartiger rundlicher Gülletank an einem Fahrzeugrahmen befestigt ist.

Gülletanks werden in der Landwirtschaft häufig zum Ausbringen von Gülle beziehungsweise Jauche auf landwirtschaftlichem Boden wie Felder oder Grünland eingesetzt. Viele Gülletanks, auch als Güllefass bekannt, verfügen über einen eigenen Fahrzeugrahmen beziehungsweise Anhängerfahrwerk und sind als sogenannte Güllewagen oder Jauchewagen bekannt, die im Betrieb von einem Traktor gezogen werden.

Die Tankwannen des Güllefasses weisen bei sogenannten Schleudertankwagen im Querschnitt häufig eine Keilform auf, die in einem oberen Bereich rund ausgebildet ist und nach unten hin spitz zuläuft. Durch diese obere runde Form kann eine maximale Befüllung der Güllefässer mit Gülle gewährleistet werden. Eine Befestigung des Güllefasses am Fahrzeugrahmen erfolgt hierbei an den runden Seitenflächen des Güllefasses, insbesondere durch eine schräge Montierung am Fahrzeugrahmen, die aufgrund der Schrägheit flexibel und insbesondere nicht kraft- beziehungsweise formschlüssig ausgebildet ist, wodurch Unebenheiten des Bodens beim Gülleausbringen zwischen Fahrzeugrahmen und Güllefass ausgeglichen werden können.

Es ist eine Aufgabe der Erfindung, einen rundlichen Gülletank für einen Gülleanhänger bereitzustellen, bei dem der Gülletank mit einer senkrechten Verbindung an einem Fahrzeugrahmen befestigbar ist, wodurch insbesondere eine senkrechte Zugverbindung realisierbar ist.

Diese Aufgabe wird durch einen Gülletank mit den Merkmalen des Anspruchs 1 und durch ein Fahrzeug mit den Merkmalen des Anspruchs 7 gelöst. Vorteilhafte Ausgestaltungen und Weiterbildungen sind Gegenstand der Unteransprüche.

Erfindungsgemäß ist ein Gülletank zur kraft- und/oder formschlüssigen Befestigung an einem Fahrzeugrahmen vorgesehen, und weist einen im Querschnitt im Wesentlichen runden Hauptkörper auf, der zur Aufnahme von Gülle vorgesehen ist. Zudem weist der Gülletank einen ersten Befestigungsbereich, der an einem hinteren Abschnitt des Hauptkörpers angeordnet ist, und zumindest einen zweiten Befestigungsbereich, der an einem vorderen, den hinteren Abschnitt gegenüberliegenden Abschnitt des Hauptkörpers angeordnet ist, auf, wobei der erste Befestigungsbereich und der zweite Befestigungsbereich im Hauptkörper integriert sind, und der erste Befestigungsbereich und der zweite Befestigungsbereich als Abweichungen, insbesondere Einbuchtungen, des Querschnitts des im Wesentlichen runden Hauptkörpers ausgebildet sind.

Vorliegend erfolgt die Befestigung des Hauptkörpers am Fahrzeugrahmen also nicht, wie herkömmlicherweise, über seine runden Seitenflächen. Die Form der runden Seitenflächen weicht erfindungsgemäß in den Befestigungsbereichen derart ab, dass in der runden Form jeweils eine Einbuchtung ausgebildet ist, die insbesondere eine senkrechte beziehungsweise gerade Befestigungsebene umfasst, an dem die Befestigung montiert werden kann. Dadurch verkleinert sich nachteilig zwar die Befüllmenge des Güllefasses um das Volumen der Einbuchtung. Dies hält sich jedoch in einem äußerst geringen Rahmen und wird erfindungsgemäß in Kauf genommen, um eine kraft- und formschlüssige Verbindung zwischen Gülletank und Fahrzeugrahmen gewährleisten zu können, die gerade nicht flexibel und/oder beweglich gelagert ist.

Erfindungsgemäß erfolgt dabei die kraft- und formschlüssige Verbindung sowohl am hinteren als auch am vorderen Abschnitt des Hauptkörpers. Diese beidseitige Verbindung ermöglicht eine optimale, insbesondere unbeweglich gelagerte Montage des Gülletanks am Fahrzeugrahmen.

Im Vergleich zu einem Gülletank mit nur einem, insbesondere im hinteren Abschnitt des Hauptkörpers ausgebildeten, einseitigen Befestigungsbereich, ermöglicht vorliegende Erfindung mit Vorteil eine vollumfängliche optimale kraft- und formschlüssige Verbindung zwischen Gülletank und Fahrzeugrahmen. In vorteilhafter Weise sind dabei zumindest vier, nämlich im vorderen Bereich zwei und im hinteren Bereich zwei Befestigungsbereiche vorgesehen.

Die Einbuchtung der Befestigungsbereiche ist dabei in ihrer Form derart ausgebildet, dass diese auf die Form des Fahrzeugrahmens abgestimmt ist, sodass die Befestigungsbereiche formgerecht auf den Fahrzeugrahmen auflegbar sind. Das Güllefass ist dabei derart auf dem Fahrzeugrahmen aufgelegt, dass der Fahrzeugrahmen das Güllefass an den Befestigungsbereichen trägt. Die Befestigungsbereiche und der Fahrzeugrahmen schließen vorzugsweise seitlich formgerecht ab. Das bedeutet, dass die Befestigungsbereiche den Fahrzeugrahmen seitlich nicht über- und ebenso nicht unterlaufen.

Befestigungsebenen der Befestigungsbereiche sind bevorzugt senkrecht zu einer Bodenebene und insbesondere senkrecht zu einer Hauptrichtung des Gülletanks ausgerichtet. Besonders bevorzugt sind die Befestigungsebenen parallel zu Seitenflächen des Fahrzeugrahmens ausgebildet beziehungsweise bilden im montierten Zustand eine Erweiterung dieser Seitenflächen.

Eine kraft- und/oder formschlüssige Befestigung ist insbesondere eine Befestigung, bei der Verschiebungen zueinander verhindert werden, beispielsweise aufgrund von Haftreibung, Kraft- oder Reibschluss. Ein Verrutschen oder Bewegen gegeneinander kann so mit Vorteil verhindert werden. Vorliegend ist zwischen dem Fahrzeugrahmen und dem Gülletank also eine Befestigung ausgebildet, bei der eine Bewegung jeglicher Art zueinander bevorzugt vollständig unterbunden ist.

Unter im Querschnitt im Wesentlichen rund ist insbesondere eine in seiner Grundform runden Form zu verstehen, die jedoch geringfügige Abweichungen aufweisen kann, beispielsweise eine keilförmige Spitze in Richtung Boden hin, und insbesondere keine kreisrunde Form erfordert. Auch ovale, elliptische oder jegliche andere Formen mit hauptsächlich runden Bereichen fallen vorliegend unter im Wesentlichen rund. Als Querschnitt ist insbesondere ein Schnitt durch den Gülletank senkrecht zu einer Hauptrichtung des Hauptkörpers zu verstehen, also insbesondere eine Scheibenansicht durch den Hauptkörper.

Als Befestigungsbereiche sind jegliche Bereiche zu verstehen, die zur Befestigung des Gülletanks am Fahrzeugrahmen vorgesehen sind und hierfür insbesondere eine im Wesentlichen senkrechte Befestigungsebene aufweisen. Die Befestigungsbereiche sind dabei die Teile des Hauptkörpers, an denen direkt die mechanische Befestigung stattfindet. Insbesondere sind die Befestigungsbereiche im Hauptkörper integriert, beziehungsweise einstückig mit diesem ausgebildet. Der Hauptkörper und die Befestigungsbereiche bilden also eine Einheit beziehungsweise einen Körper und sind in einem gemeinsamen Verfahren hergestellt. Insbesondere sind die Befestigungsbereiche Einbuchtungen beziehungsweise dafür vorgesehene Eindellungen des Hauptkörpers.

Ein hinterer Abschnitt des Hauptkörpers ist insbesondere ein Teil des Hauptkörpers, der im Betrieb des Gülletanks, also bei Ausbringen der Gülle auf landwirtschaftlichem Boden, auf einer einem Zugfahrzeug, beispielsweise einem Traktor, gegenüberliegenden Seite angeordnet ist. Dementsprechend ist der vordere Abschnitt der Teil des Hauptkörpers, der dem Zugfahrzeug zugewandt ist, und der entsprechend dem hinteren Abschnitt gegenüberliegt.

Als Abweichung ist insbesondere jegliche gewollte Änderung im Querschnitt des runden Hauptkörpers zu verstehen. Zufällig im Betrieb oder im Herstellungsverfahren entstandene Änderungen können demnach nicht als Abweichung angesehen werden. Vorzugsweise ist die Abweichung als Einbuchtung der runden Form des Querschnitts des Hauptkörpers ausgebildet. Als Einbuchtung ist eine nach innen, also ins Innere der Rundung, gerichtete Abweichung beziehungsweise Form zu verstehen, die vorzugsweise zumindest eine gerade Ebene umfasst. Diese gerade Ebene ist besonders bevorzugt geeignet, eine gerade Befestigung mit einer Seitenfläche des Fahrzeugrahmens zu ermöglichen. Hierzu weist diese Ebene mit der Seitenfläche beispielsweise nach der Befestigung des Gülletanks am Fahrzeugrahmen einen im Wesentlichen nahtlosen, versetzungsfreien und/oder stufenlosen Übergang auf.

Bevorzugt ist der erste Befestigungsbereich des hinteren Abschnitts in seiner Ausformung größer ausgebildet als der zweite Befestigungsbereich des vorderen Abschnitts. Dadurch bieten die ersten Befestigungsbereiche mit Vorteil seitlichen Platz für beispielsweise hohe beziehungsweise große Reifen, die beispielsweise am Fahrzeugrahmen angeordnet sind, um einen Gülleanhänger zu bilden. Besonders bevorzugt sind beidseitig am rundlichen Gülletank je ein erster Befestigungsbereich und ein zweiter Befestigungsbereich ausgebildet, wobei vorzugsweise die ersten Befestigungsbereiche im hinteren Abschnitt jeweils größer ausgebildet sind als die zweiten Befestigungsbereiche des vorderen Abschnitts, um seitlichen Raum für hohe Reifen zu bieten.

Bei einer vorteilhaften Ausführungsform sind die Abweichungen derart ausgeformt, dass diese bereichsweise eine im Wesentlichen senkrechte, insbesondere gerade, zum Boden gerichtete Befestigungsebene aufweisen. Dadurch kann mit Vorteil eine zuverlässige, kraft- und/oder formschlüssige und insbesondere bewegungsfeste beziehungsweise rutschfeste Befestigung zwischen Befestigungsebene und Seitenfläche des Fahrzeugrahmens realisiert werden.

Bei einer weiteren vorteilhaften Ausführungsform umfassen der erste Befestigungsbereich und der zweite Befestigungsbereich jeweils zumindest ein Befestigungselement, an dem der Gülletank befestigbar, insbesondere lösbar fest am Fahrzeugrahmen verbindbar ist. Beispielsweise ist das Befestigungselement jeweils als Durchführung durch den Befestigungsbereich des Hauptkörpers zur Aufnahme für einen Bolzen und/oder für eine Schraube ausgebildet, beispielsweise also jeweils als Führungsloch im Hauptkörper. Das Befestigungselement ist zum Beispiel eine Bolzen- oder eine Schraubenführung durch den Hauptkörper, durch die nach der Montage ein Bolzen oder eine Schraube geführt ist, um eine kraft- und/oder formschlüssige Befestigung zu gewährleisten.

Bei einer weiteren vorteilhaften Ausführungsform sind der erste Befestigungsbereich und der zweite Befestigungsbereich derart ausgebildet, dass sich im befestigten Zustand eine Zugkraft zwischen Gülletank und Fahrzeugrahmen aufbaut. Vorzugsweise ist die Zugkraft senkrecht, insbesondere gerade, zum Boden gerichtet. Dadurch kann vorteilhafterweise eine lösbar feste Verbindung zwischen Gülletank und Fahrzeugrahmen ausgebildet werden.

Weiter betrifft die Erfindung ein Fahrzeug, insbesondere einen Gülleanhänger, bei dem ein wie vorliegend beschriebener Gülletank an einem Fahrzeugrahmen befestigt ist. Insbesondere wirkt der Fahrzeugrahmen wie eine Schale, in die der Gülletank eingelegt ist. Eine Keilform des Gülletanks ist dabei im Fahrzeugrahmen eingebettet. Die Befestigungsbereiche liegen auf dem Fahrzeugrahmen auf und sind an diesen kraft- und/oder formschlüssig befestigt. Die im Wesentlichen runde Form des Hauptkörpers überragt den Fahrzeugrahmen und nimmt die Gülle auf.

Bevorzugt weist der Fahrzeugrahmen zwei parallele Längsträger auf, in die der Gülletank eingelegt ist, sodass der Gülletank mit seiner Keilform zwischen den Längsträgern eine Auslaufwanne für Gülle bildet.

Jegliche Merkmale, Ausgestaltungen, Ausführungsformen und Vorteile des Fahrzeugs finden auch in Zusammenhang mit dem erfindungsgemäßen Gülletank Anwendung, und umgekehrt.

Bei einer weiteren vorteilhaften Ausführungsform ist der Gülletank derart auf dem Fahrzeugrahmen aufgesetzt, dass der erste Befestigungsbereich und der zweite Befestigungsbereich stufenlos in eine Seitenfläche des Fahrzeugrahmens übergehen. Dadurch kann insbesondere eine mechanisch stabile und bewegungsarme Montage realisiert werden.

Bei einer weiteren vorteilhaften Ausführungsform umfasst der Fahrzeugrahmen Befestigungsplatten, die zur Aufnahme von Bolzen und/oder Schrauben vorgesehen sind, wobei der Gülletank mittels der Bolzen oder Schrauben mit dem Fahrzeugrahmen zugkräftig koppelbar ist. Die Befestigungsplatten sind beispielsweise am Fahrzeugrahmen festgeschweißt und laufen parallel zu Seitenflächen des Fahrzeugrahmens beziehungsweise im montierten Zustand parallel zu den Befestigungsbereichen des Gülletanks. Die Befestigungsplatten weisen Bolzen- beziehungsweise Schraubenausnehmungen oder -aussparungen auf, durch die zur Befestigung Bolzen oder Schrauben geführt sind.

Zusätzlich oder alternativ umfasst der Fahrzeugrahmen Aufnahmebereiche auf einer Oberseite, die zur Aufnahme von Bolzen oder Schrauben vorgesehen sind, wobei der Gülletank von seiner Unterseite mittels der Bolzen oder Schrauben mit dem Fahrzeugrahmen koppelbar ist. Hier erfolgt die Befestigung demnach nicht von Seitenflächen, sondern von der Oberseite des Fahrzeugrahmens und der Unterseite des Gülletanks, wobei durch diese Seiten Bolzen oder Schrauben zur Befestigung geführt sind.

Die Erfindung wird anhand der nachfolgenden, lediglich Beispiele darstellenden Ausführungen der Erfindung näher erläutert. Es zeigen:
- Figuren 1A, 1 B:: jeweils schematische Ansichten eines erfindungsgemäßen Ausführungsbeispiels eines Gülletanks,
- Figuren 2A bis 2D:: jeweils schematische Ansichten eines erfindungsgemäßen Ausführungsbeispiels eines Gülletanks,
- Figuren 3A, 3B:: jeweils schematische Ansichten eines erfindungsgemäßen Ausführungsbeispiels eines Fahrzeugs im Befestigungsbereich, und
- Figuren 3C bis 3F:: jeweils schematische Ansichten eines erfindungsgemäßen Ausführungsbeispiels eines Fahrzeugs umfassend Gülletank und Fahrzeugrahmen.

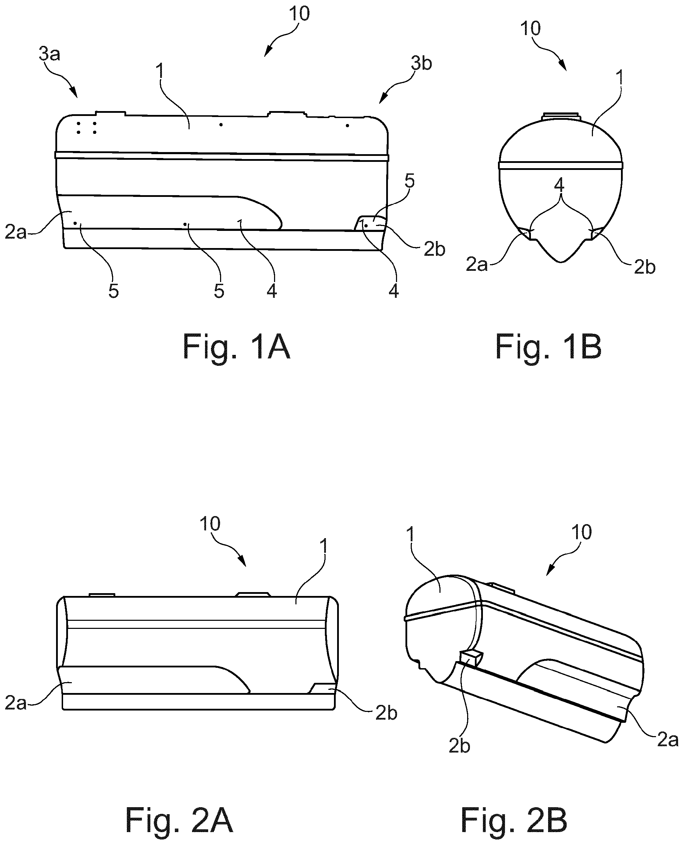

Figur 1A zeigt schematisch einen Gülletank 10 in einer Seitenansicht. Der Gülletank 10 umfasst einen Hauptkörper 1, der zur Aufnahme von Gülle vorgesehen und von oben befüllbar ist. Der Hauptkörper 1 weist einen ersten Befestigungsbereich 2a auf, der an einem hinteren Abschnitt 3a des Hauptkörpers 1 angeordnet ist. An einem dem hinteren Abschnitt 3a gegenüberliegenden vorderen Abschnitt 3b des Hauptkörpers 1 ist ein zweiter Befestigungsbereich 2b angeordnet. Die Befestigungsbereiche 2a, 2b sind dabei im Hauptkörper 1 integriert, insbesondere einstückig mit diesem ausgebildet, beispielsweise in einem gemeinsamen Verfahren hergestellt. Erfindungsgemäß sind die Befestigungsbereiche 2a, 2b als Abweichungen, insbesondere Einbuchtungen des Hauptkörpers 1 ausgebildet.

Die Form der Einbuchtungen ist beispielsweise in Figur 1B in einem Scheibenschnitt durch den Hauptkörper 1 dargestellt. Der Hauptkörper 1 weist in einem oberen Bereich eine im Wesentlichen runde Form auf. Diese runde Form läuft nach unten, also zum Boden hin in eine Keilform zu. In einem unteren Bereich der runden Form sind die Befestigungsbereiche 2a als Einkerbungen, Einbuchtungen beziehungsweise nach Innen gerichtete Einstülpungen ausgebildet. Jede Seitenfläche des Hauptkörpers 1 weist dabei den ersten Befestigungsbereich 2a und den zweiten Befestigungsbereich 2b auf, sodass im Hauptkörper insgesamt vier Befestigungsbereiche integriert sind, die zur Befestigung an einem Fahrzeugrahmen vorgesehen sind.

Die Befestigungsbereiche 2a, 2b erstrecken sich dabei nicht entlang der gesamten Seitenfläche des Hauptkörpers, sondern lediglich entlang eines Teilbereichs, sodass der Hauptkörper einen weiteren Teilbereich aufweist, in dem keine Befestigungsbereiche ausgebildet sind, und in dem somit keine Abweichung von der runden Form ausgebildet ist (siehe Figur 1A). Die Befestigungsbereiche 2a, 2b weisen im Wesentlichen senkrecht, also zum Boden oder nach unten hin gerichtete Befestigungsebenen 4 auf, an denen der Gülletank 10 am Fahrzeugrahmen befestigt wird, und an denen sich im befestigten Zustand eine Zugkraft zwischen Gülletank und Fahrzeugrahmen aufbaut beziehungsweise ausbildet.

In den Befestigungsbereichen 2a, 2b sind Befestigungselemente 5 ausgebildet, an denen der Gülletank 10 befestigbar, insbesondere lösbar fest mit dem Fahrzeugrahmen verbindbar ist, und die beispielsweise als Durchführung durch den Hauptkörper 1 zur Aufnahme für einen Bolzen und/oder für eine Schraube ausgebildet sind.

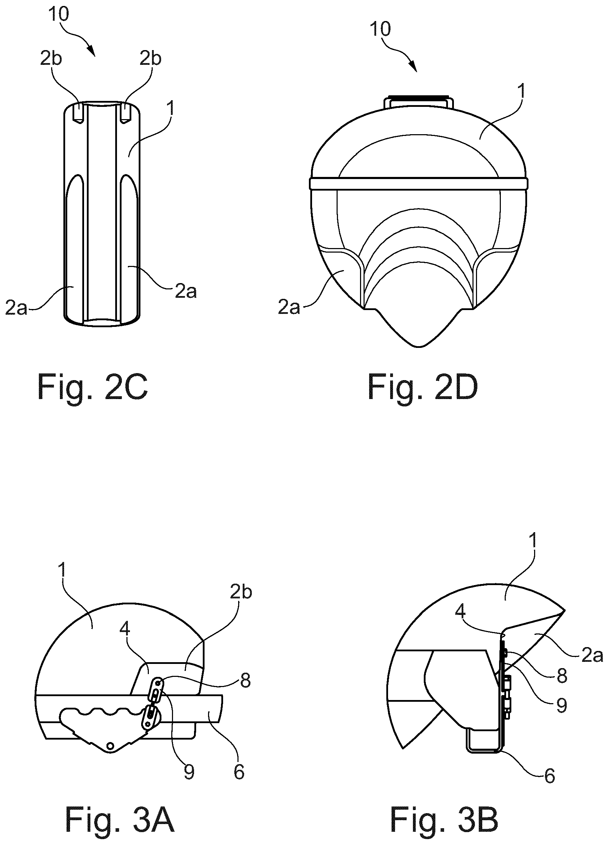

In den Figuren 2A bis 2D sind dreidimensionale Ansichten eines Gülletanks des Ausführungsbeispiels der Figuren 1A, 1B gezeigt. Figur 2A zeigt eine Seitenansicht. Figur 2B stellt eine Queransicht von seitlich schräg unten dar. Figur 2C zeigt eine Unteransicht und Figur 2D zeigt eine Rückansicht.

Im Übrigen stimmen die Ausführungsbeispiele der Figuren 2A bis 2D mit den vorherigen Ausführungsbeispielen 1A, 1B überein.

Die Figuren 3A und 3B zeigen schematische Ausschnitte vom ersten beziehungsweise zweiten Befestigungsbereich 2a, 2b, wobei der Gülletank 10 an einem Fahrzeugrahmen 6 befestigt ist, und mit diesem einen Gülleanhänger bildet. Die flache, zum Boden gerichtete, senkrechte Befestigungsebene 4 weist als Befestigungselement 5 einen Durchbruch auf, durch den ein Bolzen oder eine Schraube 8 geführt ist. Dieser Bolzen oder diese Schraube 8 ist durch eine Befestigungsplatte 9 geführt und mit dieser verbunden, wobei die Befestigungsplatte 9 an dem Hauptkörper 1 anliegt und parallel zur Befestigungsebene 4 geführt ist. Die Befestigungsplatte 9 ist wiederum am Fahrzeugrahmen 6 befestigt, insbesondere an einer Seitenfläche des Fahrzeugrahmens 6, beispielsweise mittels eines weiten Bolzens, mittels einer weiteren Schraube und/oder mittels weiterer Befestigungsplatten.

Der Gülletank 10 ist durch die Befestigung mit dem Fahrzeugrahmen 6 zugkräftig gekoppelt. Insbesondere resultiert dadurch eine senkrecht zum Boden hin gerichtete Zugkraft. Der Gülletank 10 ist mit seinem Hauptkörper 1 dabei derart auf dem Fahrzeugrahmen 6 aufgesetzt, dass die Befestigungsebenen 4 jeweils stufenlos in eine Seitenfläche des Fahrzeugrahmens 6 übergehen.

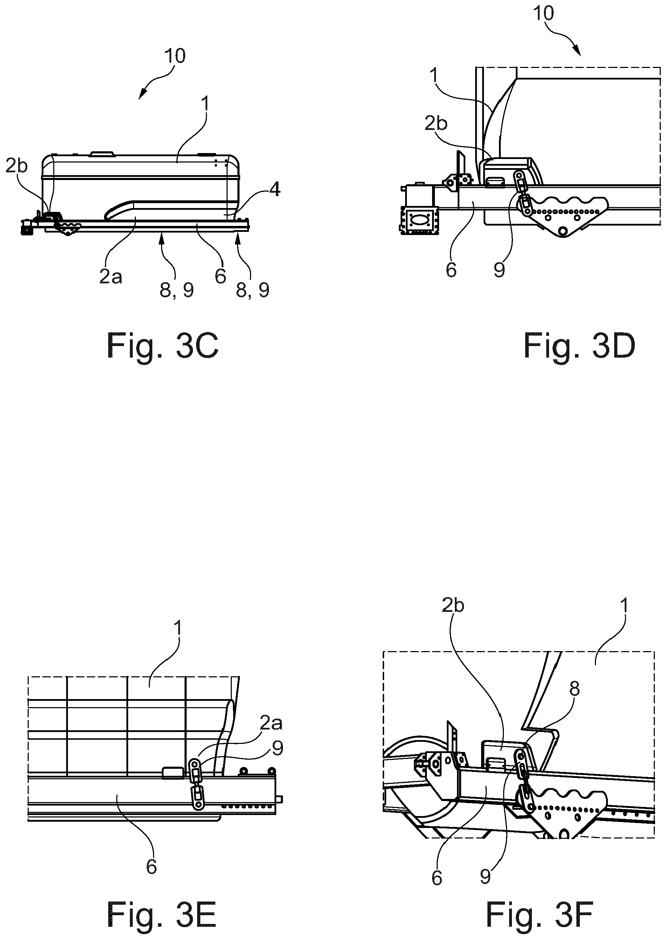

Figur 3C zeigt eine dreidimensionale Seitenansicht eines Fahrzeugs mit Gülletank 10 und Fahrzeugrahmen 6 im montierten Zustand. Figur 3D zeigt einen Ausschnitt der Figur 3C im zweiten Befestigungsbereich 2b. Figur 3E stellt einen Ausschnitt der Figur 3A in dem ersten Befestigungsbereich 2a dar. Figur 3F zeigt eine seitliche Schrägansicht der dreidimensionalen Ausführungsform des Ausführungsbeispiels der Figur 3C. Die Befestigungen zwischen Gülletank und Fahrzeugrahmen erfolgt dabei jeweils nach dem zu den Figuren 3A, 3B beschriebenen Ausführungsbeispielen. Im Übrigen stimmen die Ausführungsbeispiele der Figuren 3C bis 3F mit den vorherigen Ausführungsbeispielen 1A, 1B, 2A bis 2D, 3A und 3B überein.

## Patentansprüche

1. Gülletank (10), der zur kraft- und/oder formschlüssigen Befestigung an einem Fahrzeugrahmen (6) vorgesehen ist, aufweisend einen im Querschnitt im Wesentlichen runden Hauptkörper (1), der zur Aufnahme von Gülle vorgesehen ist, einen ersten Befestigungsbereich (2a), der an einem hinteren Abschnitt (3a) des Hauptkörpers (1) angeordnet ist, und zumindest einen zweiten Befestigungsbereich (2b), der an einem vorderen, den hinteren Abschnitt (3a) gegenüberliegenden Abschnitt (3b) des Hauptkörpers (1) angeordnet ist, wobei der erste Befestigungsbereich (2a) und der zweite Befestigungsbereich (2b) im Hauptkörper (1) integriert sind, und der erste Befestigungsbereich (2a) und der zweite Befestigungsbereich (2b) als Abweichungen, insbesondere Einbuchtungen, des Querschnitts des im Wesentlichen runden Hauptkörpers (1) ausgebildet sind.

2. Gülletank nach Anspruch 1, wobei die Abweichungen derart geformt sind, dass diese bereichsweise eine senkrechte, insbesondere gerade, zum Boden gerichtete Befestigungsebene (4) aufweisen.

3. Gülletank nach einem der vorhergehenden Ansprüche, wobei der erste Befestigungsbereich (2a) und der zweite Befestigungsbereich (2b) jeweils zumindest ein Befestigungselement (5) umfassen, an dem der Gülletank (10) befestigbar, insbesondere lösbar fest am Fahrzeugrahmen (6) verbindbar ist.

4. Gülletank nach Anspruch 3, wobei das Befestigungselement (5) jeweils als Durchführung durch den Hauptkörper (1) zur Aufnahme für einen Bolzen und/oder für eine Schraube (8) ausgebildet ist.

5. Gülletank nach einem der vorhergehenden Ansprüche, wobei der erste Befestigungsbereich (2a) und der zweite Befestigungsbereich (2b) derart ausgebildet sind, dass sich im befestigten Zustand eine Zugkraft zwischen Gülletank (10) und Fahrzeugrahmen (6) aufbaut.

6. Gülletank nach Anspruch 5, wobei die Zugkraft senkrecht, insbesondere gerade, zum Boden gerichtet ist.

7. Fahrzeug, insbesondere Gülleanhänger, bei dem ein Gülletank (10) nach einem der vorhergehenden Ansprüche an einem Fahrzeugrahmen (6) befestigt ist.

8. Fahrzeug nach Anspruch 7, wobei der Gülletank (10) derart auf dem Fahrzeugrahmen (6) aufgesetzt ist, dass der erste Befestigungsbereich (2a) und der zweite Befestigungsbereich (2b) stufenlos in eine Seitenfläche des Fahrzeugrahmens (6) übergeht.

9. Fahrzeug nach einem der vorhergehenden Ansprüche 7 oder 8, wobei der Fahrzeugrahmen (6) Befestigungsplatten (9) umfasst, die zur Aufnahme von Bolzen oder Schrauben vorgesehen sind, wobei der Gülletank (10) mittels der Bolzen oder Schrauben mit dem Fahrzeugrahmen (6) zugkräftig koppelbar ist.

10. Fahrzeug nach einem der vorhergehenden Ansprüche, wobei der Fahrzeugrahmen (6) Aufnahmebereiche auf einer Oberseite umfasst, die zur Aufnahme von Bolzen oder Schrauben vorgesehen sind, wobei der Gülletank (10) von seiner Unterseite mittels der Bolzen oder Schrauben mit dem Fahrzeugrahmen (6) koppelbar ist.
